# EUROPEAN PATENT SPECIFICATION

(11) **EP 3 958 481 B1**
(45) Date of publication and mention of the grant of the patent: **16.09.2026**
(21) Application number: 20818767.4
(22) Date of filing: 05.06.2020
(51) Int. Cl.: H04B 10/2575, H04B 10/079, H04J 14/02

(54) **ACTIVE MODULE, MOBILE COMMUNICATION FRONTHAUL SYSTEM, AND MOBILE COMMUNICATION FRONTHAUL MANAGEMENT AND CONTROL METHOD**
AKTIVES MODUL, MOBILES KOMMUNIKATIONS-FRONTHAULSYSTEM UND VERFAHREN ZUR VERWALTUNG UND STEUERUNG VON MOBILEM KOMMUNIKATIONS-FRONTHAUL
MODULE ACTIF, SYSTÈME DE FRONTHAUL DE COMMUNICATION MOBILE ET PROCÉDÉ DE GESTION ET DE COMMANDE DE FRONTHAUL DE COMMUNICATION MOBILE

(30) Priority: 06.06.2019 CN 201910491138
(43) Date of publication of application: 23.02.2022
(73) Proprietor: CHINA MOBILE COMMUNICATION CO., LTD. RESEARCH INSTITUTE, Beijing 100053 (CN); China Mobile Communications Group Co., Ltd, Beijing 100032 (CN)
(72) Inventor: LI, Han, Beijing 100032 (CN); HAN, Liuyan, Beijing 100032 (CN); ZHANG, Dechao, Beijing 100032 (CN); WANG, Dong, Beijing 100032 (CN); CAI, Qian, Beijing 100032 (CN); LI, Yunbo, Beijing 100032 (CN)
(74) Representative: J A Kemp LLP
(86) International application number: PCT/CN2020/094659
(87) International publication number: WO 2020/244628

(56) References cited:
- WO-A1-2018/113797
- WO-A1-2018/133932
- WO-A1-2019/201100
- CN-A- 102 136 868
- CN-A- 106 411 397
- CN-A- 106 817 159
- CN-A- 106 888 473
- CN-A- 106 888 473
- US-A1- 2016 218 801
- US-A1- 2018 069 627
- US-A1- 2019 089 478

## Description

### CROSS-REFERENCE TO RELATED APPLICATION

The application claims priority to Chinese Patent Application No. 201910491138.9, filed on June 6, 2019 in China.

### TECHNICAL FIELD

The present disclosure relates to the technical field of wireless communication, and in particular, to an active module, a mobile communication fronthaul system, and a mobile communication fronthaul management and control method.

### BACKGROUND

With development of the mobile communication technology, functions of a Radio Access Network (RAN) are segmented. An RAN architecture in the fifth generation mobile communication technology (5G) is a multi-stage architecture of a Remote Radio Unit (RRU) or an Active Antenna Unit (AAU), a Distribute Unit (DU), and a Centralized Unit (CU). Network deployment of a transport network may be divided into fronthaul, intermediate haul, and back haul. The proportion of Cloud-Radio Access Network (C-RAN) stations is increased gradually. A single C-RAN may cover 6-10 local or remote physical stations, and a fronthaul network becomes an important component of a mobile communication transmission network.

In the related art, the fronthaul primarily has several modes: optical fiber direct driving, passive Wavelength Division Multiplexing (WDM), passive device networking, or the like. The fronthaul modes have a common defect: that an intermediate transmission link may not be monitored and managed. For example, with regard to the optical fiber direct driving mode, the transmission network may not acquire information such as a connecting state of an intermediate optical fiber; with regard to the passive WDM mode, it is hard to perceive a fault of an Optical Distribution Network (ODN), it is hard to run and maintain optical modules, and the fault may only be troubleshot manually; and with regard to the active device networking mode, connections between the active device and the AAU and the DU are short of management means.

Related arts can be found in WO 2018/133932 A1 and US 2019/089478 A1. WO 2018/133932 A1 discloses a node (30) for use at a main site of a fronthaul network. The node comprises: an optical splitter (32) configured to receive a radio transport optical signal (34) carrying an out-of-band electrical signal comprising an indication of diagnostic monitoring information, DMI, of an optical transceiver, the optical splitter is configured to power split the radio transport optical signal to form a monitoring portion; an optical detector (16) configured to receive the monitoring portion of the radio transport optical signal and configured to convert the monitoring portion of the radio transport optical signal into an electrical signal; diagnostic monitoring interface receiver apparatus (36) configured to extract the out-of-band electrical signal from the electrical signal and configured to obtain the diagnostic monitoring information from the extracted out-of-band electrical signal; and a controller configured to collect the diagnostic monitoring information and configured to transmit the diagnostic monitoring information to a fronthaul network management system. US 2019/089478 A1 discusses A system comprising a first optical line terminal (OLT) of a first passive optical network (PON) with the first OLT configured to receive user data from a baseband unit (BBU) and send the user data to a remote radio unit (RRU) via a first optical network unit (ONU) of the first PON using a first wavelength, and a second OLT of a second PON, the second OLT configured to obtain control and management (C&M) information, share the C&M information with the first OLT, and send the C&M information to a second ONU that is co-located with the first ONU using a second wavelength.

### SUMMARY

In view of the related art, the present disclosure provides an active module, a mobile communication fronthaul system, and a mobile communication fronthaul management and control method to solve the problem that an intermediate transmission link (including optical modules in an ODN) may not be monitored and managed by an existing networking mode of a fronthaul network.

The present invention is defined in the claims.

The technical scheme of the present disclosure has the following beneficial effects.

In the embodiments of the present disclosure, an active module may acquire transmission-related performance information of a remote radio device, transmission-related performance information of a port of a baseband processing device, and transmission-related performance information of the active module itself in the fronthaul network, so as to monitor transmission of the fronthaul network.

### BRIEF DESCRIPTION OF THE DRAWINGS

FIG. 1 is a schematic structure diagram of an optical fiber direct driving fronthaul networking mode.
FIG. 2 is a schematic structure diagram of a passive WDM fronthaul networking mode.
FIG. 3 is a schematic structure diagram of an active device fronthaul networking mode.
FIG. 4 is a schematic structure diagram of an active module according to an embodiment I of the present disclosure.
FIG. 5 is a schematic structure diagram of a mobile communication fronthaul system according to an embodiment II of the present disclosure.
FIG. 6 is a schematic flowchart of a mobile communication fronthaul management and control method according to an embodiment III of the present disclosure.
FIG. 7 is a diagram of a partial function of an active device according to an embodiment I of the present disclosure.
Fig. 8 is a schematic structure diagram of an active module according to an embodiment IV of the present disclosure.

### DETAILED DESCRIPTION

In order to make purposes, technical schemes, and advantages of the present disclosure clearer, clear and intact description will be made on technical scheme of the embodiments of the present disclosure below in combination with the drawings of the embodiments. Apparently, the described embodiments are merely a part of embodiments of the present disclosure and are not all the embodiments.

First of all, a brief introduction on several fronthaul networking modes in the related art will be made below.

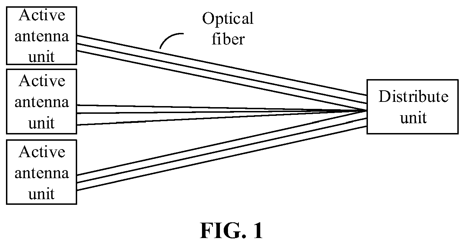

I. Optical fiber direct driving mode. As shown in FIG. 1, an RRU (or AAU) and a DU (or a Building Baseband Unit (BBU)) are directly connected point to point via a fronthaul optical module. This mode need consume a lot of optical fibers. Taking 5G as an example, three AAU are usually deployed for each physical station and each AAU need two 25G interfaces, so that one physical station need consume 12 optical fibers (including an uplink and a downlink). Furthermore, by adopting the optical fiber drive driving mode, a transmission network may not acquire information such as a connecting state of an intermediate optical fiber.

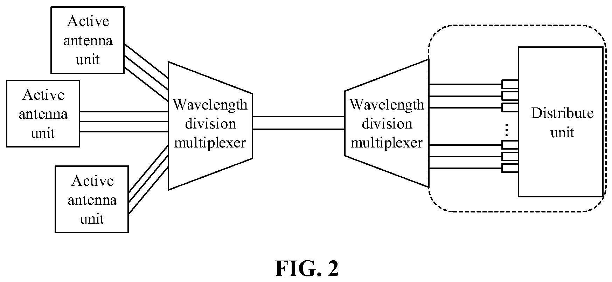

II. Passive WDM mode. As shown in FIG. 2, an RRU (or AAU) and a DU (or BBU) are configured with colored light modules, and a passive wavelength division multiplexer multiplexes a plurality of wavelengths to transmit. Compared with the optical fiber direct driving mode, the mode may save a backbone optical fiber in an ODN through a WDM technology. However, the RRU (or the AAU) and the DU (or the BBU) configured with the colored light modules are short of management means and are imperceptive to faults of the ODN. Thus, it is hard to run and maintain the optical modules, and the faults may only be troubleshot manually.

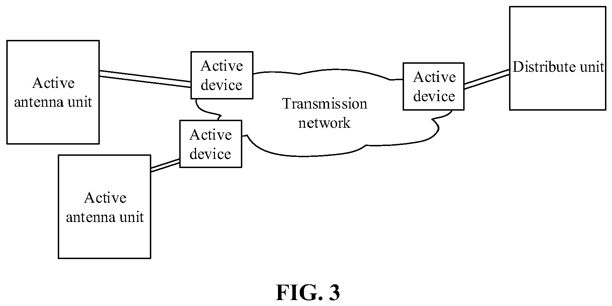

III. Active device fronthaul networking mode. As shown in FIG. 3, a client side of an active transmission device is butted to a wireless device by using a common grey interface. The transmission device is connected and networked to achieve functions of flow convergence and remoteness of a business or the like. A far-end transmission device need take electricity, so it may merely be installed at an RRU (or an AAU) to handle a single station business, which results in a need for a lot of transmission devices and a high deployment cost. Links among the transmission devices may be managed, whereas a connection between a transmission device and the RRU (or the AAU) and the DU (or the BBU) of the client side are short of management means.

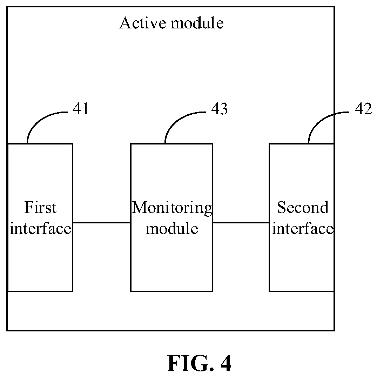

Referring to FIG. 4, FIG. 4 is a schematic structure diagram of an active module according to an embodiment I of the present disclosure. The active module includes a first interface 41, a second interface 42, and a monitoring module 43.

The first interface 41 is configured to be connected to a remote radio device.

The second interface 42 is configured to be connected to a baseband processing device.

The monitoring module 43 is configured to acquire at least one of:
transmission-related performance information of the remote radio device;
transmission-related performance information of a port of the baseband processing device; or
transmission-related performance information of the first interface and the second interface.

In the embodiments of the present disclosure, the active module may acquire the transmission-related performance information of the remote radio device, the transmission-related performance information of the port of the baseband processing device, and the transmission-related performance information of the active module in the fronthaul network, so that transmission of the fronthaul network is monitored.

It should be noted that the transmission-related performance of the remote radio device refers to transmission-related performance of an optical module in the remote radio device and transmission-related performance of a link between the remote radio device and the active module. The transmission-related performance of the port of the baseband processing device refers to transmission-related performance of a link between the port of the baseband processing device and the active device. The transmission-related performance of the first interface and the second interface refers to transmission-related performance of the first interface and the second interface themselves and transmission-related performance between the first interface and the second interface.

The active module is illustrated below.

Optionally, the transmission-related performance information may include at least one of connectivity information, transmitting optical power information, receiving optical power information, or transmission delay information.

Specifically, the transmission-related performance of the remote radio device may include a connectivity between each remote radio device and an active device, a transmitting optical power of an optical module in the remote radio device, a receiving optical power of the optical module in the remote radio device, a transmission delay between the remote radio device and the active device, or the like. The transmission-related performance of the port of the baseband processing device may include a connectivity between each port and the active device, a transmitting optical power, a receiving optical power, or the like. The transmission-related performance of the first interface and the second interface may include connectivities of the first interface and the second interface and a connectivity between the first interface and the second interface. The transmission-related performance of the first interface and the second interface may further include a transmitting optical power and a receiving optical power at the first interface, a transmitting optical power and a receiving optical power at the second interface, or the like.

The monitoring module is configured to execute the following operations.

First monitoring information sent by the remote radio device is received via the first interface. The transmission-related performance information of the remote radio device is determined based on the first monitoring information.

Via the first interface, second monitoring information is sent to the remote radio device and first feedback information of the remote radio device responding to the second monitoring information is received. The transmission-related performance information of the remote radio device is determined based on the first feedback information.

Third monitoring information sent by the baseband processing device is received via the second interface. The transmission-related performance information of the port of the baseband processing device is determined based on the third monitoring information.

Via the second interface, fourth monitoring information is sent to the baseband processing device and second feedback information of the baseband processing device responding to the fourth monitoring information is received. The transmission-related performance information of the port of the baseband processing device is determined based on the second feedback information.

Fifth monitoring information sent by the first interface and/or the second interface is received. The transmission-related performance information of the first interface and the second interface is determined based on the fifth monitoring information.

It should be noted that the first monitoring information is specifically sent by the optical module in the remote radio device.

Further optionally, the first monitoring information may include at least one of identification information, used optical wavelength information, transmitting optical power information, or receiving optical power information of the remote radio device.

The second monitoring information may include at least one of request information for inquiring transmitting optical power information, request information for inquiring receiving optical power information, or information for delay detection.

The third monitoring information may include at least one of identification information, port information, transmitting optical power information, or receiving optical power information of the baseband processing device.

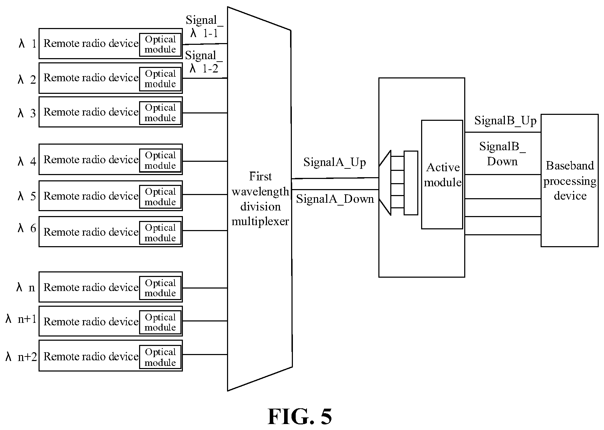

Referring to FIG. 5, FIG. 5 is a schematic structure diagram of a mobile communication fronthaul system according to an embodiment II of the present disclosure. The system includes a plurality of optical modules 51 arranged at an end of a remote radio device 01, a first wavelength division multiplexer 52 connected to the optical modules 51, a second wavelength division multiplexer 53 arranged at one end of the baseband processing device 02 and connected to the first wavelength division multiplexer 52, and the active module 54 as described in embodiment I. The active module 54 is respectively connected to the second wavelength division multiplexer 53 and the baseband processing device 02.

The first wavelength division multiplexer 52 is configured to gather optical signals received from the plurality of optical modules 51 and transmit the optical signals to the second wavelength division multiplexer 53. Additionally or alternatively, the first wavelength division multiplexer 52 is configured to separate optical signals received from the second wavelength division multiplexer 53 and transmit the optical signals to the plurality of optical modules 51.

The second wavelength division multiplexer 53 is configured to gather optical signals received from the baseband processing device 02 and transmit the optical signals to the first wavelength division multiplexer 52. Additionally or alternatively, the second wavelength division multiplexer 53 is configured to separate optical signals received from the first wavelength division multiplexer 52 and transmit the optical signals to the baseband processing device 02.

According to the mobile communication fronthaul system according to the embodiment of the present disclosure, the first wavelength division multiplexer 52 arranged at the end of the remote radio device 01 may multiplex and transmit a plurality of optical waves with different wavelengths from the plurality of remote radio devices. The second wavelength division multiplexer arranged at one end of the baseband processing device may demultiplex optical signals transmitted by the first wavelength division multiplexer 52, so as to reduce a consumption of optical fibers and the deployment cost. In addition, according to the embodiment of the present disclosure, the active module 54 may acquire the transmission-related performance information of the remote radio device, the transmission-related performance information of the port of the baseband processing device, and the transmission-related performance information of the active module itself in the fronthaul network, so that transmission of the fronthaul network is monitored.

The mobile communication fronthaul system is illustrated below.

Optionally, the second wavelength division multiplexer 53 and the active module 54 may be integrated on a same active device.

Optionally, the optical modules 51 may be fixed wavelength colored light modules or tunable colored light modules. In the mobile communication fronthaul system according to the embodiment of the present disclosure, different remote radio devices 01 may use different wavelengths.

Optionally, the first wavelength division multiplexer 52 and the second wavelength division multiplexer 53 may be passive wavelength division multiplexers.

Optionally, the active module 54 is connected to the baseband processing module 02 through a grey interface or a colored light interface.

A monitoring module of the active module 54 may be configured to execute at least one of the following operations.

First monitoring information (referring to SignalA_Up in FIG. 5, which is formed by gathering monitoring signals sent by the plurality of remote radio devices (for example, by gathering a monitoring signal Signal_λ1-1 sent by a remote radio device λ1, a monitoring signal Signal_λ2-1 sent by a remote radio device λ2, a monitoring signal Signal_3-1 sent by a remote radio device λ3, and so on)) sent by the remote radio device may be received via the first interface 55. The transmission-related performance information of the remote radio device may be determined based on the first monitoring information.

Via a first interface 55, second monitoring information (referring to SignalA_Down in FIG. 5) may be sent to the remote radio device and first feedback information (referring to SignalA_Up in FIG. 5, which when taken as the first feedback information, similar to the SignalA_Up as the first monitoring information, is formed by gathering feedback signals sent by the plurality of remote radio devices (for example, a feedback signal Signal_λ1-1 sent by the remote radio device λ1, a feedback signal Signal_λ2-1 sent by the remote radio device λ2, a feedback signal Signal_λ3-1 sent by the remote radio device λ3, and so on) of the remote radio device to the second monitoring information may be received. The transmission-related performance information of the remote radio device may be determined based on the first feedback information.

Third monitoring information (referring to SignalB_Down in FIG. 5) sent by the baseband processing device may be received via a second interface 56. The transmission-related performance information of the port of the baseband processing device may be determined based on the third monitoring information.

Via the second interface 56, fourth monitoring information (referring to SignalB_Up in FIG. 5) may be sent to the baseband processing device and second feedback information (referring to SignalB_Down in FIG. 5) of the baseband processing device responding to the fourth monitoring information may be received. The transmission-related performance information of the port of the baseband processing device may be determined based on the second feedback information.

Fifth monitoring information sent by the first interface 55 and/or the second interface 56 may be received. The transmission-related performance information of the first interface 55 and the second interface 56 may be determined based on the fifth monitoring information.

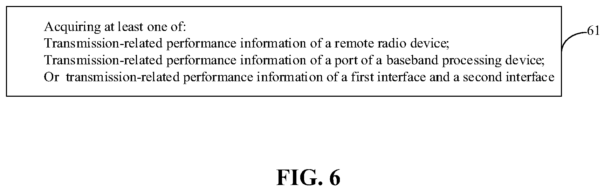

Referring to FIG. 6, FIG. 6 is schematic flow of a mobile communication fronthaul management and control method according to an embodiment III of the present disclosure, which is applied to an active module. The active module includes a first interface configured to be connected to a remote radio device and a second interface configured to be connected to a baseband processing device. The method includes the following operations.

In S61, the active module acquires at least one of:
transmission-related performance information of the remote radio device;
transmission-related performance information of a port of the baseband processing device;
transmission-related performance information of the first interface and the second interface.

In the embodiments of the present disclosure, the active module may acquire the transmission-related performance information of the remote radio device, the transmission-related performance information of the port of the baseband processing device, and the transmission-related performance information of the active module itself in the fronthaul network, so that transmission of the fronthaul network is monitored.

The mobile communication fronthaul management and control method is illustrated below.

It should be noted that the transmission-related performance of the remote radio device refers to transmission-related performance of an optical module in the remote radio device and transmission-related performance of a link between the remote radio device and the active module. The transmission-related performance of the port of the baseband processing device refers to transmission-related performance of a link between the port of the baseband processing device and the active device. The transmission-related performance of the first interface and the second interface refers to transmission-related performance of the first interface and the second interface themselves and transmission-related performance between the first interface and the second interface.

Optionally, the transmission-related performance information may include at least one of connectivity information, transmitting optical power information, receiving optical power information, or transmission delay information.

Specifically, the transmission-related performance of the remote radio device may include a connectivity between each remote radio device and an active device, a transmitting optical power of an optical module in the remote radio device, a receiving optical power of the optical module in the remote radio device, a transmission delay between the remote radio device and the active device, or the like. The transmission-related performance of the port of the baseband processing device may include a connectivity between each port and the active device, a transmitting optical power, a receiving optical power, or the like. The transmission-related performance of the first interface and the second interface may include connectivities of the first interface and the second interface and a connectivity between the first interface and the second interface. The transmission-related performance of the first interface and the second interface may further include a transmitting optical power and a receiving optical power at the first interface, a transmitting optical power and a receiving optical power at the second interface, or the like.

The operation that the transmission-related performance information is acquired includes the following operations.

First monitoring information sent by the remote radio device is received. The transmission-related performance information of the remote radio device is determined based on the first monitoring information.

Second monitoring information is sent to the remote radio device and first feedback information of the remote radio device responding to the second monitoring information is received. The transmission-related performance information of the remote radio device is determined based on the first feedback information.

Third monitoring information sent by the baseband processing device is received. The transmission-related performance information of the port of the baseband processing device is determined based on the third monitoring information.

Fourth monitoring information is sent to the baseband processing device and second feedback information of the baseband processing device responding to the fourth monitoring information is received. The transmission-related performance information of the port of the baseband processing device is determined based on the second feedback information.

Fifth monitoring information sent by the first interface and/or the second interface is received. The transmission-related performance information of the first interface and the second interface is determined based on the fifth monitoring information.

It should be noted that the first monitoring information is specifically sent by the optical module in the remote radio device.

Further optionally, the first monitoring information may include at least one of identification information, used optical wavelength information, transmitting optical power information, or receiving optical power information of the remote radio device.

The second monitoring information may include at least one of request information for inquiring the transmitting optical power information, request information for inquiring the receiving optical power information, or information for delay detection.

The third monitoring information may include at least one of identification information, port information, transmitting optical power information, or receiving optical power information of the baseband processing device.

Optionally, the second monitoring information may be sent by way of broadcast or unicast. Sending the second monitoring information by way of broadcast refers to sending the second monitoring information to all the remote radio devices connected to the active module. Sending the second monitoring information by way of unicast refers to providing the second monitoring information with an identification of a target remote radio device and sending the second monitoring information to the target remote radio device corresponding to the identification.

Optionally, the operation that second monitoring information is sent to the remote radio device and first feedback information of the remote radio device responding to the second monitoring information is received, and the transmission-related performance information of the remote radio device is determined based on the first feedback information may include the following operations.

The second monitoring information including the information for delay detection may be sent to the remote radio device. The information for delay detection may include locally sent timestamp information.

Loopback second monitoring information after the remote radio device receives the second monitoring information may be received as the first feedback information.

Locally received timestamp information may be recorded when the first feedback information is received locally.

Transmission delay information may be determined based on the locally sent timestamp information and the locally received timestamp information. The transmission delay may be a bidirectional delay between the active module and a certain remote radio device.

Further optionally, the information for delay detection may include identification information of the remote radio device.

The method further includes the following operation.

Responsive to that acquired transmission-related performance information includes transmitting optical power information or receiving optical power information lower than an optical power warning threshold value, warning information is generated and locally output.

Optionally, the method may further include at least one of the following operations.

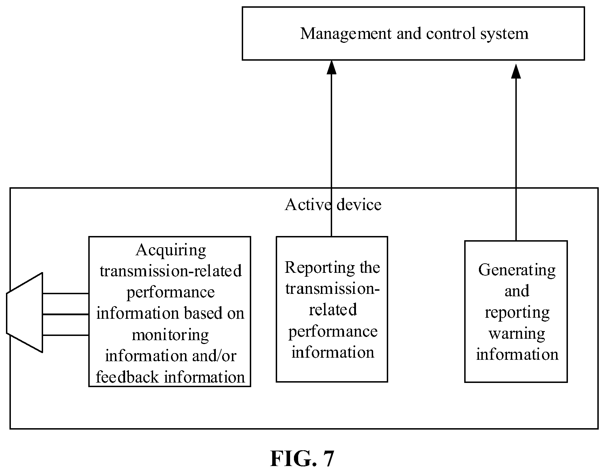

The acquired transmission-related performance information may be reported to a management and control system (referring to FIG. 7).

Responsive to that the acquired transmission-related performance information may include transmitting optical power information or receiving optical power information lower than the optical power warning threshold value, warning information may be generated and reported to the management and control system (referring to FIG. 7).

A fault may be located based on the acquired transmission-related performance information.

In other optional embodiments, the active module may further directly send at least one of the received first monitoring information, first feedback information, third monitoring information, second feedback information, or fifth monitoring information to the management and control system.

With respect to locating the fault based on the acquired transmission-related performance information, specifically, responsive to that the monitoring information or the feedback information of a certain interface (port), a certain wavelength, or a certain remote radio device includes (transmitting or receiving) optical power information lower than the optical power warning threshold value, a transmission side of the interface (port), the wavelength, or the remote radio device may have a fault. That is to say, based on the first monitoring information, the first feedback information, the third monitoring information, the second feedback information, and the fifth monitoring information, whether the fault is a local fault or a far-end fault may be determined, and the position of the fault may be located, so as to monitor fronthaul transmission between each far-end remote device and the baseband processing device effectively.

The method according to the embodiment of the present disclosure is a technical scheme corresponding to the active module of the embodiment I with a same inventive concept, and may achieve the same technical effect.

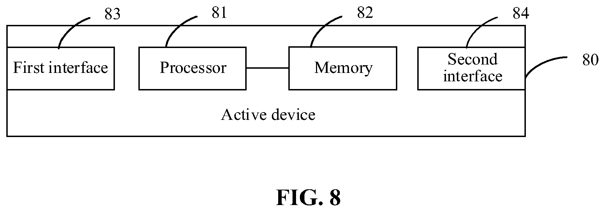

Referring to FIG. 8, Fig. 8 is a schematic structure diagram of an active module according to an embodiment IV of the present disclosure. The active module 80 includes a processor 81, a memory 82, and a computer program stored in the memory 82 and executable on the processor 81. The active module 80 further includes a first interface 83 configured to be connected to a remote radio device and a second interface 84 configured to be connected to a baseband processing device. When executing the computer program, the processor 81 implements the following operations.

At least one of the following transmission-related performance information is acquired:
transmission-related performance information of the remote radio device;
transmission-related performance information of a port of the baseband processing device;
transmission-related performance information of the first interface and the second interface.

In the embodiments of the present disclosure, the active module may acquire the transmission-related performance information of the remote radio device, the transmission-related performance information of the port of the baseband processing device, and the transmission-related performance information of the active module itself in the fronthaul network, so that transmission of the fronthaul network is monitored. Optionally, the transmission-related performance information may include at least one of connectivity information, transmitting optical power information, receiving optical power information, or transmission delay information.

The processor 81 further implements the following operations when executing the computer program.

The operation that the transmission-related performance information is acquired includes the following operations.

First monitoring information sent by the remote radio device is received. The transmission-related performance information of the remote radio device is determined based on the first monitoring information.

Second monitoring information is sent to the remote radio device and first feedback information of the remote radio device responding to the second monitoring information is received. The transmission-related performance information of the remote radio device is determined based on the first feedback information.

Third monitoring information sent by the baseband processing device is received. The transmission-related performance information of the port of the baseband processing device is determined based on the third monitoring information.

Fourth monitoring information is sent to the baseband processing device and second feedback information of the baseband processing device responding to the fourth monitoring information is received. The transmission-related performance information of the baseband processing device is determined based on the second feedback information.

Fifth monitoring information sent by the first interface and/or the second interface is received. The transmission-related performance information of the first interface and the second interface is determined based on the fifth monitoring information.

Optionally, the first monitoring information may include at least one of identification information, used optical wavelength information, transmitting optical power information, or receiving optical power information of the remote radio device.

The second monitoring information may include at least one of request information for inquiring transmitting optical power information, request information for inquiring receiving optical power information, or information for delay detection.

The third monitoring information may include at least one of identification information, port information, transmitting optical power information, or receiving optical power information of the baseband processing device.

Optionally, the second monitoring information may be sent by way of broadcast or unicast.

Optionally, the processor 81 may further implement the following operation when executing the computer program.

The operation that second monitoring information is sent to the remote radio device and first feedback information of the remote radio device responding to the second monitoring information is received, and the transmission-related performance information of the remote radio device is determined based on the first feedback information may include the following operations.

The second monitoring information including the information used for delay detection may be sent to the remote radio device. The information for delay detection may include locally sent timestamp information.

Loopback second monitoring information after the remote radio device receives the second monitoring information may be received as the first feedback information.

Locally received timestamp information may be recorded when the first feedback information is received locally.

Transmission delay information may be determined based on the locally sent timestamp information and the locally received timestamp information.

Optionally, the information for delay detection may include identification information of the remote radio device.

The processor 81 further implements the following operation when executing the computer program.

Responsive to that acquired transmission-related performance information includes transmitting optical power information or receiving optical power information lower than an optical power warning threshold value, the warning information is generated and locally output.

Optionally, the processor 81 may further implement at least one of the following operations when executing the computer program.

The acquired transmission-related performance information may be reported to a management and control system.

Responsive to that the acquired transmission-related performance information may include transmitting optical power information or receiving optical power information lower than the optical power warning threshold value, and the warning information may be generated and reported to the management and control system.

A fault may be located based on the acquired transmission-related performance information. The specific working process of the embodiment of the present disclosure is consistent with that in the embodiment III of the method, which is not repeated herein. Details are seen in description of the operations of the method in the embodiment III.

The embodiment V of the present disclosure further provides a computer readable storage medium, having stored thereon a computer program. When executed by a processor, the computer program may implement an operation of the any one mobile communication fronthaul management and control method as described in the embodiment III. Details are seen in description of the operations of the method in the abovementioned corresponding embodiments.

The computer readable medium may include volatile and non-volatile media, and movable and immovable media, which may store information by any means or techniques. Information may be a computer readable instruction, a data structure, a module of a program, or other data. An example of the storage medium of the computer may include, but not limited to, a Phase Random Access Memory (PRAM), a Static Random Access Memory (SRAM), a Dynamic Random Access Memory (DRAM), a Random Access Memory (RAM) of other types, a Read Only Memory (ROM), an Electrically Erasable Programmable Read Only Memory (EEPROM), a flash memory or other memory techniques, a Compact Disk Read Only Memory (CD-ROM), a Digital versatile disc (DVD) or other optical memories, a magnetic cassette tape, a magnetic tape, and magnetic cassette storage or other magnetic storage devices or any other non-transmission media, which may be configured to store information accessible to a computing device.

## Claims

1. An active module, comprising:
a first interface (41) configured to be connectable to a remote radio device;
a second interface (42) configured to be connectable to a baseband processing device, wherein the second interface is a grey interface or a colored light interface; and
a monitoring module (43) configured to acquire at least one of:
transmission-related performance information of the remote radio device; or
transmission-related performance information of a port of the baseband processing device; or
transmission-related performance information of the first interface (41) and the second interface (42);
wherein:
the transmission-related performance information of the remote radio device is transmission-related performance information of an optical module in the remote radio device and transmission-related performance information of a link between the remote radio device and the active module;
the transmission-related performance information of the port of the baseband processing device is transmission-related performance information of a link between the port of the baseband processing device and the active module; and
the transmission-related performance information of the first interface (41) and the second interface (42) is transmission-related performance information of the first interface (41) and the second interface (42) themselves and transmission-related performance information between the first interface (41) and the second interface (42);
the transmission-related performance information of the remote radio device comprises connectivity information between the remote radio device and the active module, transmitting optical power information and receiving optical power information of an optical module in the remote radio device, and transmission delay information between the remote radio device and the active module; the transmission-related performance information of the port of the baseband processing device comprises connectivity information between the port and the active module, and transmitting optical power information and receiving optical power information of the port; the transmission-related performance information of the first interface (41) and the second interface (42) comprises connectivity information of the first interface (41) and the second interface (42), connectivity information between the first interface (41) and the second interface (42), and transmitting optical power information and receiving optical power information at the first interface (41) and the second interface (42),
wherein the monitoring module (43) is configured to execute:
receiving first monitoring information sent by the remote radio device via the first interface (41), and determining the transmission-related performance information of the remote radio device based on the first monitoring information;
sending second monitoring information to the remote radio device and receiving first feedback information of the remote radio device responding to the second monitoring information via the first interface (41), and determining the transmission-related performance information of the remote radio device based on the first feedback information;
receiving third monitoring information sent by the baseband processing device via the second interface (42), and determining the transmission-related performance information of the port of the baseband processing device based on the third monitoring information;
sending fourth monitoring information to the baseband processing device and receiving second feedback information of the baseband processing device responding to the fourth monitoring information via the second interface (42), and determining the transmission-related performance information of the port of the baseband processing device based on the second feedback information; and
receiving fifth monitoring information sent by at least one of the first interface (41) or the second interface (42), and determining the transmission-related performance information of the first interface (41) and the second interface (42) based on the fifth monitoring information;
the active module is further configured to:
responsive to the acquired transmission-related performance information comprising transmitting optical power information or receiving optical power information lower than an optical power warning threshold value, generating warning information and locally outputting the warning information,
wherein sending second monitoring information to the remote radio device and receiving first feedback information of the remote radio device responding to the second monitoring information via the first interface (41), and determining the transmission-related performance information of the remote radio device based on the first feedback information comprises:
sending the second monitoring information comprising information for delay detection to the remote radio device, the information for delay detection comprising locally sent timestamp information;
receiving loopback second monitoring information after the remote radio device receives the second monitoring information as the first feedback information;
recording locally received timestamp information when the first feedback information is received locally; and
determining transmission delay information based on the locally sent timestamp information and the locally received timestamp information, wherein the transmission delay is a bidirectional delay between the active module and the remote radio device.

2. The active module of claim 1, wherein the first monitoring information comprises at least one of identification information, used optical wavelength information, transmitting optical power information, or receiving optical power information of the remote radio device;
the second monitoring information further comprises at least one of request information for inquiring transmitting optical power information, or request information for inquiring receiving optical power information; and
the third monitoring information comprises at least one of identification information, port information, transmitting optical power information, or receiving optical power information of the baseband processing device.

3. A mobile communication fronthaul system, comprising: a plurality of optical modules arranged at an end of a remote radio device, a first wavelength division multiplexer connectable to the optical modules, a second wavelength division multiplexer arranged at one end of a baseband processing device and connectable to the first wavelength division multiplexer, and an active module of claim 1 or 2, the active module being respectively connectable to the second wavelength division multiplexer and the baseband processing device, wherein
the first wavelength division multiplexer is configured to perform at least one of: gathering optical signals received from the plurality of optical modules and transmitting the optical signals to the second wavelength division multiplexer, or separating optical signals received from the second wavelength division multiplexer and transmitting the optical signals to the plurality of optical modules; and
the second wavelength division multiplexer is configured to perform at least one of: gathering optical signals received from the baseband processing device and transmitting the optical signals to the first wavelength division multiplexer, or separating optical signals received from the first wavelength division multiplexer and transmitting the optical signals to the baseband processing device.

4. A mobile communication fronthaul management and control method applied to an active module, wherein the active module comprises a first interface configured to be connectable to a remote radio device and a second interface configured to be connectable to a baseband processing device, the second interface is a grey interface or a colored light interface, and the method comprises:
acquiring at least one of:
transmission-related performance information of the remote radio device;
transmission-related performance information of a port of the baseband processing device; or
transmission-related performance information of the first interface (41) and the second interface (42);
wherein:
the transmission-related performance information of the remote radio device is transmission-related performance information of an optical module in the remote radio device and transmission-related performance information of a link between the remote radio device and the active module;
the transmission-related performance information of the port of the baseband processing device is transmission-related performance information of a link between the port of the baseband processing device and the active module; and
the transmission-related performance information of the first interface and the second interface is transmission-related performance information of the first interface and the second interface themselves and transmission-related performance information between the first interface and the second interface;
the transmission-related performance information of the remote radio device comprises connectivity information between the remote radio device and the active module, transmitting optical power information and receiving optical power information of an optical module in the remote radio device, and transmission delay information between the remote radio device and the active module; the transmission-related performance information of the port of the baseband processing device comprises connectivity information between the port and the active module, and transmitting optical power information and receiving optical power information of the port; the transmission-related performance information of the first interface (41) and the second interface (42) comprises connectivity information of the first interface (41) and the second interface (42), connectivity information between the first interface (41) and the second interface (42), and transmitting optical power information and receiving optical power information at the first interface (41) and the second interface (42),
wherein acquiring the transmission-related performance information comprises:
receiving first monitoring information sent by the remote radio device, and determining the transmission-related performance information of the remote radio device based on the first monitoring information;
sending second monitoring information to the remote radio device and receiving first feedback information of the remote radio device responding to the second monitoring information, and determining the transmission-related performance information of the remote radio device based on the first feedback information;
receiving third monitoring information sent by the baseband processing device, and determining the transmission-related performance information of the port of the baseband processing device based on the third monitoring information;
sending fourth monitoring information to the baseband processing device and receiving second feedback information of the baseband processing device responding to the fourth monitoring information, and determining the transmission-related performance information of the port of the baseband processing device based on the second feedback information; and
receiving fifth monitoring information sent by at least one of the first interface (41) or the second interface (42), and determining the transmission-related performance information of the first interface (41) and the second interface (42) based on the fifth monitoring information;
the method further comprises:
responsive to the acquired transmission-related performance information comprising transmitting optical power information or receiving optical power information lower than an optical power warning threshold value, generating warning information and locally outputting the warning information,
wherein sending second monitoring information to the remote radio device and receiving first feedback information of the remote radio device responding to the second monitoring information, and determining the transmission-related performance information of the remote radio device based on the first feedback information comprises:
sending the second monitoring information comprising information for delay detection to the remote radio device, the information for delay detection comprising locally sent timestamp information;
receiving loopback second monitoring information after the remote radio device receives the second monitoring information as the first feedback information;
recording locally received timestamp information when the first feedback information is received locally; and
determining transmission delay information based on the locally sent timestamp information and the locally received timestamp information, wherein the transmission delay is a bidirectional delay between the active module and the remote radio device.

5. The method of claim 4, wherein the first monitoring information comprises at least one of identification information, used optical wavelength information, transmitting optical power information, or receiving optical power information of the remote radio device;
the second monitoring information further comprises at least one of request information for inquiring transmitting optical power information, or request information for inquiring receiving optical power information; and
the third monitoring information comprises at least one of identification information, port information, transmitting optical power information, or receiving optical power information of the baseband processing device.

6. The method of claim 4, wherein the second monitoring information is sent by way of broadcast or unicast.

7. The method of claim 4, wherein the information for delay detection comprises identification information of the remote radio device.

8. An active module (80), comprising a memory (82), a processor (81), and a computer program stored in the memory and executable on the processor (81), wherein the active module further comprises a first interface (83) configured to be connectable to a remote radio device and a second interface (84) configured to be connectable to a baseband processing device, and a monitoring module configured to acquire transmission-related performance information, wherein when the computer program is executed on the processor (81), the first interface (83), the second interface (84) and the monitoring module implement the mobile communication fronthaul management and control method of any one of claims 4-7.

## Patentansprüche

1. Aktives Modul, umfassend:
eine erste Schnittstelle (41), die konfiguriert ist, um mit einer entfernten Funkvorrichtung verbindbar zu sein;
eine zweite Schnittstelle (42), die konfiguriert ist, um mit einer Basisbandverarbeitungsvorrichtung verbindbar zu sein, wobei die zweite Schnittstelle eine graue Schnittstelle oder eine Farblichtschnittstelle ist; und
ein Überwachungsmodul (43), das konfiguriert ist, um mindestens eines zu erfassen von:
sendebezogenen Leistungsinformationen der entfernten Funkvorrichtung; oder
sendebezogenen Leistungsinformationen eines Ports der Basisbandverarbeitungsvorrichtung; oder
sendebezogenen Leistungsinformationen der ersten Schnittstelle (41) und der zweiten Schnittstelle (42);
wobei:
die sendebezogenen Leistungsinformationen der entfernten Funkvorrichtung sendebezogene Leistungsinformationen eines optischen Moduls in der entfernten Funkvorrichtung und sendebezogene Leistungsinformationen einer Verknüpfung zwischen der entfernten Funkvorrichtung und dem aktiven Modul sind;
die sendebezogenen Leistungsinformationen des Ports der Basisbandverarbeitungsvorrichtung sendebezogene Leistungsinformationen einer Verknüpfung zwischen dem Port der Basisbandverarbeitungsvorrichtung und dem aktiven Modul sind; und
die sendebezogenen Leistungsinformationen der ersten Schnittstelle (41) und der zweiten Schnittstelle (42) die sendebezogenen Leistungsinformationen der ersten Schnittstelle (41) und der zweiten Schnittstelle (42) selbst und die sendebezogenen Leistungsinformationen zwischen der ersten Schnittstelle (41) und der zweiten Schnittstelle (42) sind;
die sendebezogenen Leistungsinformationen der entfernten Funkvorrichtung Konnektivitätsinformationen zwischen der entfernten Funkvorrichtung und dem aktiven Modul, Informationen über eine optische Sendeleistung und Informationen über eine optische Empfangsleistung eines optischen Moduls in der entfernten Funkvorrichtung und Sendeverzögerungsinformationen zwischen der entfernten Funkvorrichtung und dem aktiven Modul umfassen; die sendebezogenen Leistungsinformationen des Ports der Basisbandverarbeitungsvorrichtung Konnektivitätsinformationen zwischen dem Port und dem aktiven Modul und Informationen über die optische Sendeleistung und Informationen über die optische Empfangsleistung des Ports umfassen; die sendebezogenen Leistungsinformationen der ersten Schnittstelle (41) und der zweiten Schnittstelle (42) Konnektivitätsinformationen der ersten Schnittstelle (41) und der zweiten Schnittstelle (42), Konnektivitätsinformationen zwischen der ersten Schnittstelle (41) und der zweiten Schnittstelle (42) und Informationen über die optische Sendeleistung und Informationen über die optische Empfangsleistung an der ersten Schnittstelle (41) und der zweiten Schnittstelle (42) umfassen,
wobei das Überwachungsmodul (43) konfiguriert ist, um auszuführen:
Empfangen von ersten Überwachungsinformationen, die durch die entfernte Funkvorrichtung über die erste Schnittstelle (41) gesendet werden, und Bestimmen der sendebezogenen Leistungsinformationen der entfernten Funkvorrichtung basierend auf den ersten Überwachungsinformationen;
Übermitteln von zweiten Überwachungsinformationen an die entfernte Funkvorrichtung und Empfangen von ersten Rückmeldeinformationen der entfernten Funkvorrichtung als Reaktion auf die zweiten Überwachungsinformationen über die erste Schnittstelle (41), und Bestimmen der sendebezogenen Leistungsinformationen der entfernten Funkvorrichtung basierend auf den ersten Rückmeldeinformationen;
Empfangen von dritten Überwachungsinformationen, die durch die Basisbandverarbeitungsvorrichtung über die zweite Schnittstelle (42) gesendet werden, und Bestimmen der sendebezogenen Leistungsinformationen des Ports der Basisbandverarbeitungsvorrichtung basierend auf den dritten Überwachungsinformationen;
Übermitteln von vierten Überwachungsinformationen an die Basisbandverarbeitungsvorrichtung und Empfangen von zweiten Rückmeldeinformationen der Basisbandverarbeitungsvorrichtung als Antwort auf die vierte Überwachungsinformationen über die zweite Schnittstelle (42), und Bestimmen der sendebezogenen Leistungsinformationen des Ports der Basisbandverarbeitungsvorrichtung basierend auf den zweiten Rückmeldeinformationen; und
Empfangen von fünften Überwachungsinformationen, die durch mindestens eine der ersten Schnittstelle (41) oder der zweiten Schnittstelle (42) gesendet werden, und Bestimmen der sendebezogenen Leistungsinformationen der ersten Schnittstelle (41) und der zweiten Schnittstelle (42) basierend auf den fünften Überwachungsinformationen;
das aktive Modul ferner konfiguriert ist zum:
als Reaktion auf die erfassten sendebezogenen Leistungsinformationen, die Informationen über die optische Sendeleistung oder Informationen über die optische Empfangsleistung umfassen, die niedriger als ein Warngrenzwert für optische Leistung sind, Erzeugen von Warninformationen und lokales Ausgeben der Warninformationen,
wobei das Übermitteln von zweiten Überwachungsinformationen an die entfernte Funkvorrichtung und das Empfangen von ersten Rückmeldeinformationen der entfernten Funkvorrichtung als Reaktion auf die zweiten Überwachungsinformationen über die erste Schnittstelle (41), und das Bestimmen der sendebezogenen Leistungsinformationen der entfernten Funkvorrichtung basierend auf den ersten Rückmeldeinformationen umfasst:
Übermitteln der zweiten Überwachungsinformationen, die Informationen über eine Verzögerungserkennung umfassen, an die entfernte Funkvorrichtung, wobei die Informationen über die Verzögerungserkennung lokal gesendete Zeitstempelinformationen umfassen;
Empfangen von zweiten Rückschleifenüberwachungsinformationen, nachdem die entfernte Funkvorrichtung die zweiten Überwachungsinformationen empfängt, als die ersten Rückmeldeinformationen;
Aufzeichnen von lokal empfangenen Zeitstempelinformationen, wenn die ersten Rückmeldeinformationen lokal empfangen werden; und
Bestimmen von Sendeverzögerungsinformationen basierend auf den lokal gesendeten Zeitstempelinformationen und den lokal empfangenen Zeitstempelinformationen, wobei die Sendeverzögerung eine bidirektionale Verzögerung zwischen dem aktiven Modul und der entfernten Funkvorrichtung ist.

2. Aktives Modul nach Anspruch 1, wobei die ersten Überwachungsinformationen mindestens eines von Identifikationsinformationen, Informationen über eine verwendete optische Wellenlänge, Informationen über die optische Sendeleistung oder Informationen über die optische Empfangsleistung der entfernten Funkvorrichtung umfassen;
die zweiten Überwachungsinformationen ferner mindestens eines von Anforderungsinformationen zum Abfragen von Informationen über die optische Sendeleistung oder Anforderungsinformationen zum Abfragen von Informationen über die optische Empfangsleistung umfassen; und
die dritten Überwachungsinformationen mindestens eines von Identifikationsinformationen, Portinformationen, Informationen über die optische Sendeleistung oder Informationen über die optische Empfangsleistung der Basisbandverarbeitungsvorrichtung umfassen.

3. Mobilkommunikations-Fronthaul-System, umfassend: eine Vielzahl von optischen Modulen, die an einem Ende einer entfernten Funkvorrichtung angeordnet sind, einen ersten Wellenlängenmultiplexer, der mit den optischen Modulen verbindbar ist, einen zweiten Wellenlängenmultiplexer, der an einem Ende einer Basisbandverarbeitungsvorrichtung angeordnet und mit dem ersten Wellenlängenmultiplexer verbindbar ist, und ein aktives Modul nach Anspruch 1 oder 2, wobei das aktive Modul jeweils mit dem zweiten Wellenlängenmultiplexer und der Basisbandverarbeitungsvorrichtung verbindbar ist, wobei
der erste Wellenlängenmultiplexer konfiguriert ist, um, mindestens eines durchzuführen von: Sammeln von optischen Signalen, die von der Vielzahl von optischen Modulen empfangen werden, und Senden der optischen Signale an den zweiten Wellenlängenmultiplexer, oder Trennen von optischen Signalen, die von dem zweiten Wellenlängenmultiplexer empfangen werden, und Senden der optischen Signale an die Vielzahl von optischen Modulen; und
der zweite Wellenlängenmultiplexer konfiguriert ist, um mindestens eines durchzuführen von: Sammeln von optischen Signalen, die von der Basisbandverarbeitungsvorrichtung empfangen werden, und Senden der optischen Signale an den ersten Wellenlängenmultiplexer, oder Trennen von optischen Signalen, die von dem ersten Wellenlängenmultiplexer empfangen werden, und Senden der optischen Signale an die Basisbandverarbeitungsvorrichtung.

4. Mobilkommunikations-Fronthaul-Verwaltungs- und Steuerungsverfahren, das auf ein aktives Modul angewendet wird, wobei das aktive Modul eine erste Schnittstelle, die konfiguriert ist, um mit einer entfernten Funkvorrichtung verbindbar zu sein, und eine zweite Schnittstelle, die konfiguriert ist, um mit einer Basisbandverarbeitungsvorrichtung verbindbar zu sein, umfasst, wobei die zweite Schnittstelle eine graue Schnittstelle oder eine Farblichtschnittstelle ist, und das Verfahren umfasst:
Erfassen mindestens eines von:
sendebezogenen Leistungsinformationen der entfernten Funkvorrichtung;
sendebezogenen Leistungsinformationen eines Ports der Basisbandverarbeitungsvorrichtung; oder
sendebezogenen Leistungsinformationen der ersten Schnittstelle (41) und der zweiten Schnittstelle (42);
wobei:
die sendebezogenen Leistungsinformationen der entfernten Funkvorrichtung sendebezogene Leistungsinformationen eines optischen Moduls in der entfernten Funkvorrichtung und sendebezogene Leistungsinformationen einer Verknüpfung zwischen der entfernten Funkvorrichtung und dem aktiven Modul sind;
die sendebezogenen Leistungsinformationen des Ports der Basisbandverarbeitungsvorrichtung sendebezogene Leistungsinformationen einer Verknüpfung zwischen dem Port der Basisbandverarbeitungsvorrichtung und dem aktiven Modul sind; und
die sendebezogenen Leistungsinformationen der ersten Schnittstelle und der zweiten Schnittstelle sendebezogene Leistungsinformationen der ersten Schnittstelle und der zweiten Schnittstelle selbst und sendebezogene Leistungsinformationen zwischen der ersten Schnittstelle und der zweiten Schnittstelle sind;
die sendebezogenen Leistungsinformationen der entfernten Funkvorrichtung Konnektivitätsinformationen zwischen der entfernten Funkvorrichtung und dem aktiven Modul, Informationen über eine optische Sendeleistung und Informationen über eine optische Empfangsleistung eines optischen Moduls in der entfernten Funkvorrichtung und Sendeverzögerungsinformationen zwischen der entfernten Funkvorrichtung und dem aktiven Modul umfassen; die sendebezogenen Leistungsinformationen des Ports der Basisbandverarbeitungsvorrichtung Konnektivitätsinformationen zwischen dem Port und dem aktiven Modul und Informationen über die optische Sendeleistung und Informationen über die optische Empfangsleistung des Ports umfassen; die sendebezogenen Leistungsinformationen der ersten Schnittstelle (41) und der zweiten Schnittstelle (42) Konnektivitätsinformationen der ersten Schnittstelle (41) und der zweiten Schnittstelle (42), Konnektivitätsinformationen zwischen der ersten Schnittstelle (41) und der zweiten Schnittstelle (42) und Informationen über die optische Sendeleistung und Informationen über die optische Empfangsleistung an der ersten Schnittstelle (41) und der zweiten Schnittstelle (42) umfassen,
wobei das Erfassen der sendebezogenen Leistungsinformationen umfasst:
Empfangen von ersten Überwachungsinformationen, die durch die entfernte Funkvorrichtung gesendet werden, und Bestimmen der sendebezogenen Leistungsinformationen der entfernten Funkvorrichtung basierend auf den ersten Überwachungsinformationen;
Übermitteln von zweiten Überwachungsinformationen an die entfernte Funkvorrichtung und Empfangen von ersten Rückmeldeinformationen der entfernten Funkvorrichtung als Reaktion auf die zweiten Überwachungsinformationen, und Bestimmen der sendebezogenen Leistungsinformationen der entfernten Funkvorrichtung basierend auf den ersten Rückmeldeinformationen;
Empfangen von dritten Überwachungsinformationen, die durch die Basisbandverarbeitungsvorrichtung gesendet werden, und Bestimmen der sendebezogenen Leistungsinformationen des Ports der Basisbandverarbeitungsvorrichtung basierend auf den dritten Überwachungsinformationen;
Übermitteln von vierten Überwachungsinformationen an die Basisbandverarbeitungsvorrichtung und Empfangen von zweiten Rückmeldeinformationen der Basisbandverarbeitungsvorrichtung als Antwort auf die vierte Überwachungsinformationen, und Bestimmen der sendebezogenen Leistungsinformationen des Ports der Basisbandverarbeitungsvorrichtung basierend auf den zweiten Rückmeldeinformationen; und
Empfangen von fünften Überwachungsinformationen, die durch mindestens eine der ersten Schnittstelle (41) oder der zweiten Schnittstelle (42) gesendet werden, und Bestimmen der sendebezogenen Leistungsinformationen der ersten Schnittstelle (41) und der zweiten Schnittstelle (42) basierend auf den fünften Überwachungsinformationen;
das Verfahren ferner umfasst:
als Reaktion auf die erfassten sendebezogenen Leistungsinformationen, die Informationen über die optische Sendeleistung oder Informationen über die optische Empfangsleistung umfassen, die niedriger als ein Warngrenzwert für optische Leistung sind, Erzeugen von Warninformationen und lokales Ausgeben der Warninformationen,
wobei das Übermitteln von zweiten Überwachungsinformationen an die entfernte Funkvorrichtung und das Empfangen von ersten Rückmeldeinformationen der entfernten Funkvorrichtung als Reaktion auf die zweiten Überwachungsinformationen und das Bestimmen der sendebezogenen Leistungsinformationen der entfernten Funkvorrichtung basierend auf den ersten Rückmeldeinformationen umfasst:
Übermitteln der zweiten Überwachungsinformationen, die Informationen über eine Verzögerungserkennung umfassen, an die entfernte Funkvorrichtung, wobei die Informationen über die Verzögerungserkennung lokal gesendete Zeitstempelinformationen umfassen;
Empfangen von zweiten Rückschleifenüberwachungsinformationen, nachdem die entfernte Funkvorrichtung die zweiten Überwachungsinformationen empfängt, als die ersten Rückmeldeinformationen;
Aufzeichnen von lokal empfangenen Zeitstempelinformationen, wenn die ersten Rückmeldeinformationen lokal empfangen werden; und
Bestimmen von Sendeverzögerungsinformationen basierend auf den lokal gesendeten Zeitstempelinformationen und den lokal empfangenen Zeitstempelinformationen, wobei die Sendeverzögerung eine bidirektionale Verzögerung zwischen dem aktiven Modul und der entfernten Funkvorrichtung ist.

5. Verfahren nach Anspruch 4, wobei die erste Überwachungsinformationen mindestens eines von Identifikationsinformationen, Informationen über eine verwendete optische Wellenlänge, Informationen über die optische Sendeleistung oder Informationen über die optische Empfangsleistung der entfernten Funkvorrichtung umfassen;
die zweiten Überwachungsinformationen ferner mindestens eines von Anforderungsinformationen zum Abfragen von Informationen über die optische Sendeleistung oder Anforderungsinformationen zum Abfragen von Informationen über die optische Empfangsleistung umfassen; und
die dritten Überwachungsinformationen mindestens eines von Identifikationsinformationen, Portinformationen, Informationen über die optische Sendeleistung oder Informationen über die optische Empfangsleistung der Basisbandverarbeitungsvorrichtung umfassen.

6. Verfahren nach Anspruch 4, wobei die zweiten Überwachungsinformationen mittels Broadcast oder Unicast gesendet werden.

7. Verfahren nach Anspruch 4, wobei die Informationen über die Verzögerungserkennung Identifikationsinformationen der entfernten Funkvorrichtung umfassen.

8. Aktives Modul (80), umfassend einen Speicher (82), einen Prozessor (81) und ein Computerprogramm, das in dem Speicher gespeichert und auf dem Prozessor (81) ausführbar ist, wobei das aktive Modul ferner eine erste Schnittstelle (83), die konfiguriert ist, um mit einer entfernten Funkvorrichtung verbindbar zu sein, und eine zweite Schnittstelle (84), die konfiguriert ist, um mit einer Basisbandverarbeitungsvorrichtung verbindbar zu sein, und ein Überwachungsmodul umfasst, das konfiguriert ist, um sendebezogene Leistungsinformationen zu erfassen, wobei, wenn das Computerprogramm auf dem Prozessor (81) ausgeführt wird, die erste Schnittstelle (83), die zweite Schnittstelle (84) und das Überwachungsmodul das Mobilkommunikations-Fronthaul-Verwaltungs- und Steuerungsverfahren nach einem der Ansprüche 4 bis 7 implementieren.

## Revendications

1. Module actif, comprenant :
une première interface (41) configurée pour pouvoir être connectée à un dispositif radio distant ;
une seconde interface (42) configurée pour pouvoir être connectée à un dispositif de traitement en bande de base, dans lequel la seconde interface est une interface grise ou une interface à lumière colorée ; et
un module de surveillance (43) configuré pour acquérir au moins l'une parmi :
des informations de performance liées à la transmission du dispositif radio distant ; ou
des informations de performance liées à la transmission d'un port du dispositif de traitement en bande de base ; ou
des informations de performance liées à la transmission de la première interface (41) et de la seconde interface (42) ;
dans lequel :
les informations de performance liées à la transmission du dispositif radio distant sont des informations de performance liées à la transmission d'un module optique dans le dispositif radio distant et des informations de performance liées à la transmission d'une liaison entre le dispositif radio distant et le module actif ;
les informations de performance liées à la transmission du port du dispositif de traitement en bande de base sont des informations de performance liées à la transmission d'une liaison entre le port du dispositif de traitement en bande de base et le module actif ; et
les informations de performance liées à la transmission de la première interface (41) et de la seconde interface (42) sont des informations de performance liées à la transmission de la première interface (41) et de la seconde interface (42) elles-mêmes et des informations de performance liées à la transmission entre la première interface (41) et la seconde interface (42) ;
les informations de performance liées à la transmission du dispositif radio distant comprennent des informations de connectivité entre le dispositif radio distant et le module actif, des informations de puissance optique de transmission et des informations de puissance optique de réception d'un module optique dans le dispositif radio distant, et des informations de retard de transmission entre le dispositif radio distant et le module actif ; les informations de performance liées à la transmission du port du dispositif de traitement en bande de base comprennent des informations de connectivité entre le port et le module actif, et des informations de puissance optique de transmission et des informations de puissance optique de réception du port ; les informations de performance liées à la transmission de la première interface (41) et de la seconde interface (42) comprennent des informations de connectivité de la première interface (41) et de la seconde interface (42), des informations de connectivité entre la première interface (41) et la seconde interface (42), et des informations de puissance optique de transmission et des informations de puissance optique de réception au niveau de la première interface (41) et de la seconde interface (42),
dans lequel le module de surveillance (43) est configuré pour exécuter :
la réception de premières informations de surveillance envoyées par le dispositif radio distant par l'intermédiaire de la première interface (41), et la détermination des informations de performance liées à la transmission du dispositif radio distant sur la base des premières informations de surveillance ;
l'envoi de deuxièmes informations de surveillance au dispositif radio distant et la réception de premières informations de rétroaction du dispositif radio distant répondant aux deuxièmes informations de surveillance par l'intermédiaire de la première interface (41), et la détermination des informations de performance liées à la transmission du dispositif radio distant sur la base des premières informations de rétroaction ;
la réception de troisièmes informations de surveillance envoyées par le dispositif de traitement en bande de base par l'intermédiaire de la seconde interface (42), et la détermination des informations de performance liées à la transmission du port du dispositif de traitement en bande de base sur la base des troisièmes informations de surveillance ;
l'envoi de quatrièmes informations de surveillance au dispositif de traitement en bande de base et la réception de secondes informations de rétroaction du dispositif de traitement en bande de base répondant aux quatrièmes informations de surveillance par l'intermédiaire de la seconde interface (42), et la détermination des informations de performance liées à la transmission du port du dispositif de traitement en bande de base sur la base des secondes informations de rétroaction ; et
la réception de cinquièmes informations de surveillance envoyées par au moins l'une parmi la première interface (41) ou la seconde interface (42), et la détermination des informations de performance liées à la transmission de la première interface (41) et de la seconde interface (42) sur la base des cinquièmes informations de surveillance ;
le module actif est en outre configuré pour :
en réponse au fait que les informations de performance liées à la transmission acquises comprennent des informations de puissance optique de transmission ou des informations de puissance optique de réception inférieures à une valeur seuil d'avertissement de puissance optique, générer des informations d'avertissement et délivrer localement en sortie les informations d'avertissement,
dans lequel l'envoi de deuxièmes informations de surveillance au dispositif radio distant et la réception de premières informations de rétroaction du dispositif radio distant répondant aux deuxièmes informations de surveillance par l'intermédiaire de la première interface (41), et la détermination des informations de performance liées à la transmission du dispositif radio distant sur la base des premières informations de rétroaction comprennent :
l'envoi des deuxièmes informations de surveillance comprenant des informations pour la détection de retard au dispositif radio distant, les informations pour la détection de retard comprenant des informations d'horodatage envoyées localement ;
la réception de deuxièmes informations de surveillance de bouclage après que le dispositif radio distant a reçu les deuxièmes informations de surveillance en tant que premières informations de rétroaction ;
l'enregistrement d'informations d'horodatage reçues localement lorsque les premières informations de rétroaction sont reçues localement ; et
la détermination d'informations de retard de transmission sur la base des informations d'horodatage envoyées localement et des informations d'horodatage reçues localement, dans lequel le retard de transmission est un retard bidirectionnel entre le module actif et le dispositif radio distant.

2. Module actif selon la revendication 1, dans lequel les premières informations de surveillance comprennent au moins l'une parmi des informations d'identification, des informations de longueur d'onde optique utilisée, des informations de puissance optique de transmission, ou des informations de puissance optique de réception du dispositif radio distant ;
les deuxièmes informations de surveillance comprennent en outre au moins l'une parmi des informations de demande pour demander des informations de puissance optique de transmission, ou des informations de demande pour demander des informations de puissance optique de réception ; et
les troisièmes informations de surveillance comprennent au moins l'une parmi des informations d'identification, des informations de port, des informations de puissance optique de transmission, ou des informations de puissance optique de réception du dispositif de traitement en bande de base.

3. Système de liaison frontale de communication mobile, comprenant : une pluralité de modules optiques disposés à une extrémité d'un dispositif radio distant, un premier multiplexeur à répartition en longueur d'onde pouvant être connecté aux modules optiques, un second multiplexeur à répartition en longueur d'onde disposé à une extrémité d'un dispositif de traitement en bande de base et pouvant être connecté au premier multiplexeur à répartition en longueur d'onde, et un module actif selon la revendication 1 ou 2, le module actif pouvant être connecté respectivement au second multiplexeur à répartition en longueur d'onde et au dispositif de traitement en bande de base, dans lequel
le premier multiplexeur à répartition en longueur d'onde est configuré pour effectuer au moins l'une parmi : la collecte de signaux optiques reçus à partir de la pluralité de modules optiques et la transmission des signaux optiques au second multiplexeur à répartition en longueur d'onde, ou la séparation de signaux optiques reçus à partir du second multiplexeur à répartition en longueur d'onde et la transmission des signaux optiques à la pluralité de modules optiques ; et
le second multiplexeur à répartition en longueur d'onde est configuré pour effectuer au moins l'une parmi : la collecte de signaux optiques reçus à partir du dispositif de traitement en bande de base et la transmission des signaux optiques au premier multiplexeur à répartition en longueur d'onde, ou la séparation de signaux optiques reçus à partir du premier multiplexeur à répartition en longueur d'onde et la transmission des signaux optiques au dispositif de traitement en bande de base.

4. Procédé de gestion et de commande de liaison frontale de communication mobile appliqué à un module actif, dans lequel le module actif comprend une première interface configurée pour pouvoir être connectée à un dispositif radio distant et une seconde interface configurée pour pouvoir être connectée à un dispositif de traitement en bande de base, la seconde interface est une interface grise ou une interface à lumière colorée, et le procédé comprend :
l'acquisition d'au moins l'une parmi :
des informations de performance liées à la transmission du dispositif radio distant ;
des informations de performance liées à la transmission d'un port du dispositif de traitement en bande de base ; ou
des informations de performance liées à la transmission de la première interface (41) et de la seconde interface (42) ;
dans lequel :
les informations de performance liées à la transmission du dispositif radio distant sont des informations de performance liées à la transmission d'un module optique dans le dispositif radio distant et des informations de performance liées à la transmission d'une liaison entre le dispositif radio distant et le module actif ;
les informations de performance liées à la transmission du port du dispositif de traitement en bande de base sont des informations de performance liées à la transmission d'une liaison entre le port du dispositif de traitement en bande de base et le module actif ; et
les informations de performance liées à la transmission de la première interface et de la seconde interface sont des informations de performance liées à la transmission de la première interface et de la seconde interface elles-mêmes et des informations de performance liées à la transmission entre la première interface et la seconde interface ;
les informations de performance liées à la transmission du dispositif radio distant comprennent des informations de connectivité entre le dispositif radio distant et le module actif, des informations de puissance optique de transmission et des informations de puissance optique de réception d'un module optique dans le dispositif radio distant, et des informations de retard de transmission entre le dispositif radio distant et le module actif ; les informations de performance liées à la transmission du port du dispositif de traitement en bande de base comprennent des informations de connectivité entre le port et le module actif, et des informations de puissance optique de transmission et des informations de puissance optique de réception du port ; les informations de performance liées à la transmission de la première interface (41) et de la seconde interface (42) comprennent des informations de connectivité de la première interface (41) et de la seconde interface (42), des informations de connectivité entre la première interface (41) et la seconde interface (42), et des informations de puissance optique de transmission et des informations de puissance optique de réception au niveau de la première interface (41) et de la seconde interface (42),
dans lequel l'acquisition des informations de performance liées à la transmission comprend :
la réception de premières informations de surveillance envoyées par le dispositif radio distant, et la détermination des informations de performance liées à la transmission du dispositif radio distant sur la base des premières informations de surveillance ;
l'envoi de deuxièmes informations de surveillance au dispositif radio distant et la réception de premières informations de rétroaction du dispositif radio distant répondant aux deuxièmes informations de surveillance, et la détermination des informations de performance liées à la transmission du dispositif radio distant sur la base des premières informations de rétroaction ;
la réception de troisièmes informations de surveillance envoyées par le dispositif de traitement en bande de base, et la détermination des informations de performance liées à la transmission du port du dispositif de traitement en bande de base sur la base des troisièmes informations de surveillance ;
l'envoi de quatrièmes informations de surveillance au dispositif de traitement en bande de base et la réception de secondes informations de rétroaction du dispositif de traitement en bande de base répondant aux quatrièmes informations de surveillance, et la détermination des informations de performance liées à la transmission du port du dispositif de traitement en bande de base sur la base des secondes informations de rétroaction ; et
la réception de cinquièmes informations de surveillance envoyées par au moins l'une parmi la première interface (41) ou la seconde interface (42), et la détermination des informations de performance liées à la transmission de la première interface (41) et de la seconde interface (42) sur la base des cinquièmes informations de surveillance ;
le procédé comprend en outre :
en réponse au fait que les informations de performance liées à la transmission acquises comprennent des informations de puissance optique de transmission ou des informations de puissance optique de réception inférieures à une valeur seuil d'avertissement de puissance optique, la génération d'informations d'avertissement et le fait de délivrer localement en sortie les informations d'avertissement,
dans lequel l'envoi de deuxièmes informations de surveillance au dispositif radio distant et la réception de premières informations de rétroaction du dispositif radio distant répondant aux deuxièmes informations de surveillance, et la détermination des informations de performance liées à la transmission du dispositif radio distant sur la base des premières informations de rétroaction comprennent :
l'envoi des deuxièmes informations de surveillance comprenant des informations pour la détection de retard au dispositif radio distant, les informations pour la détection de retard comprenant des informations d'horodatage envoyées localement ;
la réception de deuxièmes informations de surveillance de bouclage après que le dispositif radio distant a reçu les deuxièmes informations de surveillance en tant que premières informations de rétroaction ;
l'enregistrement d'informations d'horodatage reçues localement lorsque les premières informations de rétroaction sont reçues localement ; et
la détermination d'informations de retard de transmission sur la base des informations d'horodatage envoyées localement et des informations d'horodatage reçues localement, dans lequel le retard de transmission est un retard bidirectionnel entre le module actif et le dispositif radio distant.

5. Procédé selon la revendication 4, dans lequel les premières informations de surveillance comprennent au moins l'une parmi des informations d'identification, des informations de longueur d'onde optique utilisée, des informations de puissance optique de transmission, ou des informations de puissance optique de réception du dispositif radio distant ;
les deuxièmes informations de surveillance comprennent en outre au moins l'une parmi des informations de demande pour demander des informations de puissance optique de transmission, ou des informations de demande pour demander des informations de puissance optique de réception ; et
les troisièmes informations de surveillance comprennent au moins l'une parmi des informations d'identification, des informations de port, des informations de puissance optique de transmission, ou des informations de puissance optique de réception du dispositif de traitement en bande de base.

6. Procédé selon la revendication 4, dans lequel les deuxièmes informations de surveillance sont envoyées par diffusion générale ou monodiffusion.

7. Procédé selon la revendication 4, dans lequel les informations pour la détection de retard comprennent des informations d'identification du dispositif radio distant.

8. Module actif (80), comprenant une mémoire (82), un processeur (81), et un programme informatique stocké dans la mémoire et exécutable sur le processeur (81), dans lequel le module actif comprend en outre une première interface (83) configurée pour pouvoir être connectée à un dispositif radio distant et une seconde interface (84) configurée pour pouvoir être connectée à un dispositif de traitement en bande de base, et un module de surveillance configuré pour acquérir des informations de performance liées à la transmission, dans lequel, lorsque le programme informatique est exécuté sur le processeur (81), la première interface (83), la seconde interface (84) et le module de surveillance mettent en œuvre le procédé de gestion et de commande de liaison frontale de communication mobile selon l'une quelconque des revendications 4 à 7.
